# EUROPÄISCHE PATENTANMELDUNG

(11) **EP 4 461 589 A1**
(43) Veröffentlichungstag der Anmeldung: **13.11.2024**
(21) Anmeldenummer: 24168692.2
(22) Anmeldetag: 05.04.2024
(51) Int. Cl.: B60L 53/16, H01R 13/453

(54) **STECKVERBINDUNG ZUM LADEN EINES ELEKTROFAHRZEUGS**

(30) Priorität: 11.05.2023 DE 102023112467
(71) Anmelder: Juice Technology AG, 8184 Bachenbülach (CH)
(72) Erfinder: ERNI, Christoph, 8184 Bachenbülach (CH)
(74) Vertreter: Caspary, Karsten

(57) **Zusammenfassung**

Steckverbindung (1) zum Laden eines Elektrofahrzeugs mit einer Kupplung (3), die mindestens eine stromführende Buchse (5) aufweist, einer Steckeinrichtung, die mindestens einen stromführenden Stift (7) aufweist, wobei die Kupplung (3) und die Steckeinrichtung dazu eingerichtet sind, ausschließlich in einer Axialrichtung zueinander bewegt zu werden, um in Eingriff miteinander eine elektrische Verbindung zwischen der mindestens einen Buchse (5) und einem dazugehörigen mindestens einen Stift (7) herzustellen, und mindestens einen Blendenelement (9) an der Kupplung (3), das mindestens eine Buchse (5) der Kupplung (3) in einer ersten, geschlossenen Stellung (4) abdeckt und das die mindestens eine Buchse (5) in einer zweiten, geöffneten Stellung (6) freigibt, wobei das Bewegen der Kupplung (3) und der Steckeinrichtung zueinander in Axialrichtung ein Ineinandergreifen des mindestens einen Stifts (7) mit dem mindestens einen Blendenelement (9) derart bewirkt, dass durch eine Bewegung des Blendenelements (9), das Blendenelement (9) die zweite, geöffnete Stellung (6) einnimmt und somit ein elektrischer Kontakt zwischen dem mindestens einen Stift (7) und der entsprechenden mindestens einen Buchse (5) ermöglicht ist.

## Beschreibung

Zum Laden von Elektrofahrzeugen werden für gewöhnlich Steckverbindungen eingesetzt, die das Fahrzeug mit einem Ladekabel einer Ladesäule elektrisch zu verbinden. Hierbei sind Steckverbindungen jeweils am Fahrzeug und an einem Ende des Ladekabels vorgesehen, das mit einem anderen Ende fest an der Ladesäule installiert ist. Dabei wird eine Kupplung an einem Ende des Ladekabels angebracht, die dazu ausgebildet ist, sich mit einer Steckeinrichtung des Fahrzeugs zu verbinden. Die Kupplung ist dazu zweckmäßig integral mit einem Griffstück ausgebildet, das einer Bedienperson ein Einführen der Kupplung in die korrespondierende Steckeinrichtung am Fahrzeug ermöglicht. Aktuell existieren eine Reihe von genormten Steckverbindungen wie z. B. netzseitig der so genannte "Mennekes"- oder Typ-2-Stecker gemäß IEC 62196-2-X, das vor allem in Japan und Nordamerika für Gleichstrom verwendete CHAdeMO System oder die CCS- oder Typ-1-Fahrzeugkupplung, die in Nordamerika für das Laden mit Wechselstrom eingesetzt wird.

In manchen Ländern, z.B. einigen Mitgliedsstaaten der europäischen Union, ist es gesetzlich vorgeschrieben, die elektrischen Kontakte von derartigen Steckverbindungen im öffentlichen, gewerblichen oder privaten Bereich physisch abzudecken. Diese Anforderung schützt eine Bedienperson vor einem elektrischen Schlag, falls die Person in direkten Kontakt mit den stromführenden Kontakten der Steckverbindungen gelangt.

Eine Variante die elektrischen Kontakte einer Kupplung eines Ladekabels bei Nichtbenutzung abzudecken, stellen derzeit Typ 3-Kupplungen gemäß IEC 62196, beziehungsweise nach DIN EN 62196, mit einer schwenkbaren Klappe dar, die die elektrischen Kontakte der Steckverbindung mechanisch abdeckt. Diese Klappen sind gemeinhin unvorteilhaft über ein Drehgelenk mit der Kupplung verbunden, weshalb die Klappen mühelos bei äußeren Krafteinwirkungen infolge einer Hebelwirkung am Drehgelenk durch die Klappe selbst abbrechen.

Die EP 2 686 915 B1 stellt zu Schutzzwecken eine Steckverbindung vor, die eine Blende und einen Drehring aufweist. Der Drehring weist ferner eine Durchgangsöffnung auf, in welcher die Kupplung eines Ladekabels formschlüssig eingreifen kann, um mit dem Drehring drehfest gekoppelt zu sein. Die Blende ist zwischen dem Drehring und einer Steckeinrichtung positioniert und deckt die stromführenden Kontakte mechanisch ab. Die Blende wird mithilfe eines Mechanismus, der durch die Drehung der Kupplung in dem Drehring angetrieben wird, derart geschwenkt, dass diese den Zugang zu der Steckeinrichtung freigibt und die Kupplung von der Bedienperson weiter durch den Drehring in Kopplungsrichtung geschoben werden kann. Diese vorgeschlagene Steckverbindung ist zur Anbringung an einem Ladekabel aufgrund ihres großen Bauvolumens und des damit einhergehenden Gewichts ungünstig.

Als eine weitere Alternativlösung stellt die EP 0 714 152 A1 eine Steckverbindung vor, bei der das Ladekabel eine Buchse aufweist, welche eine feststehende Blende und in Richtung der stromführenden Kontakte eine radial drehbare Blende aufweist, wobei die Blenden jeweils Durchgangslöcher aufweisen, die bei Nichtbenutzung der Kupplung zueinander versetzt sind. Die Steckeinrichtung offenbart eine dazu vergleichbare Blendenanordnung, die zudem einem Stift umfasst, der in die drehbare Blende der Kupplung eingreifen kann. Wird die Steckverbindung durch eine Bedienperson in Kopplungsrichtung miteinander verbunden, so wird die Blendenanordnung der Steckeinrichtung in Axialrichtung verschoben und dabei derart gedreht, dass mittels der Stiftverbindung die Durchgangslöcher beider Blendenanordnungen zueinander fluchten und ein elektrischer Kontakt zwischen der Steckeinrichtung und der Kupplung hergestellt werden kann. Diese Steckverbindung umfasst eine Mehrzahl von bewegten Blendenelementen und mechanisch bewegten Komponenten, die einerseits ein gewisses Bauvolumen fordern und andererseits dem ständigen Verschleiß ausgesetzt sind.

Es ist daher die Aufgabe der vorliegenden Erfindung, eine Steckverbindung zum Laden eines Elektrofahrzeugs bereitzustellen, die die oben genannten Nachteile mindestens teilweise überwindet, stromführende Kontakte physisch bedeckt, einen simplen Aufbau aufweist und einen geringen Bauraum benötigt, so dass diese in eine Kupplung eines an einer Ladesäule fest installierten Ladekabels, insbesondere in eine oder mehrere nach DIN EN 62196 spezifizierte Kupplungen, integriert werden kann.

Die Aufgabe wird durch den Gegenstand des Anspruchs 1 gelöst. Vorteilhafte Ausführungsformen sind in den abhängigen Ansprüchen beschrieben.

Erfindungsgemäß wird eine Steckverbindung zum Laden eines Elektrofahrzeugs bereitgestellt, mit einer Kupplung, die mindestens eine stromführende Buchse aufweist und einer Steckeinrichtung, die mindestens einen stromführenden Stift aufweist, wobei die Kupplung und die Steckeinrichtung dazu eingerichtet sind, ausschließlich in einer Axialrichtung zueinander bewegt zu werden, um in Eingriff miteinander eine stromführende Verbindung zwischen der mindestens einen Buchse und einem dazugehörigen mindestens einen Stift herzustellen. Ferner weist die Steckverbindung mindestens ein Blendenelement an der Kupplung auf, das mindestens eine Buchse der Kupplung in einer ersten, geschlossenen Stellung abdeckt und das die mindestens eine Buchse in einer zweiten, geöffneten Stellung freigibt, wobei das Bewegen der Kupplung und der Steckeinrichtung zueinander in Axialrichtung ein Ineinandergreifen des mindestens einen Stifts mit dem mindestens einen Blendenelement derart bewirkt, dass durch eine Bewegung des Blendenelements das Blendenelement die zweite, geöffnete Stellung einnimmt und somit ein elektrischer Kontakt zwischen dem mindestens einen Stift und der entsprechenden mindestens einen Buchse ermöglicht ist. Ein elektrischer Kontakt zwischen Steckeinrichtung und Kupplung ist in der ersten, geschlossenen Stellung des Blendenelements folglich nicht möglich, sondern nur in der zweiten, geöffneten Stellung des Blendenelements.

Hierdurch wird eine Steckverbindung vorgeschlagen, deren Blendenelement in einer Kupplung eines Ladekabels angeordnet werden kann und die die stromführenden Kontakte der Kupplung sicher physisch abdeckt. Des Weiteren ist Steckverbindung dazu geeignet, in eine oder mehrere nach DIN EN 62196 spezifizierten Steckverbindungen integriert zu werden, um mit bereits bekannten fahrzeugseitigen Steckeinrichtungen ineinandergreifen zu können. Die Steckverbindung ist dazu geeignet, mit Steckeinrichtungen von Bestandsfahrzeugen ineinanderzugreifen. Zudem sind die Blendenelemente der Steckverbindung gegen äußere Krafteinwirkungen geschützt, so dass insbesondere die Kupplung der Steckverbindung besonders dazu geeignet ist, an Ladekabeln von öffentlich zugänglichen Ladesäulen angebracht zu werden.

Unter dem Begriff Kupplung ist im Zusammenhang der vorliegenden Erfindung der weibliche Teil der Steckverbindung zu verstehen, der mindestens eine Buchse aufweist, die dazu eingerichtet ist, einen Stift aufzunehmen beziehungsweise mindestens teilweise außenumfangsseitig zu kontaktieren. Unter einer Steckeinrichtung oder einem Stecker ist das männliche Gegenstück der Steckverbindung zu verstehen, das mindestens einen Stift aufweist, der dazu eingerichtet ist, mit einer Buchse des weiblichen Teils der Steckverbindung ineinanderzugreifen und so eine stromführende Verbindung herzustellen.

Der Stift der Steckeinrichtung weist bevorzugt einen runden Querschnitt und damit eine im Wesentlichen zylindrische Form auf und erstreckt sich linear in einer Haupterstreckungsrichtung. Auch andere Querschnittsformen sind möglich, z.B. elliptisch oder polygonal. Das freie Ende des Stifts kann eine abgerundete, abgeflachte oder teilweise konisch zulaufende Oberfläche aufweisen. Das andere Ende des Stifts ist fest mit der Steckeinrichtung verankert und stromleitend mit dem Ladekabel verbunden.

Die Buchse der Kupplung weist mit Vorzug einen mindestens teilweise runden Querschnitt auf. Die Buchse kann weiterhin Abschnitte mit unterschiedlichen Durchmessern oder anderen Querschnittsformen aufweisen. Ebenfalls ist es vorstellbar, dass die Buchse in mehrere, eigenständige Segmente unterteilt ist, die derart angeordnet sind, um den Stift außenumfangsseitig elektrisch zu kontaktieren. Im Besonderen kann die Buchse zusätzlich oder alternativ umfangsseitige Ausschnitte aufweisen, durch die sich Abschnitte der Kupplung oder des Blendenelements erstrecken. Die Querschnittsformen der Stifte der Steckeinrichtung sind bevorzugt zu den Querschnittsformen der Buchsen der Kupplung komplementär ausgebildet.

Die Steckeinrichtung und die Kupplung sind vorteilhafterweise derart ausgebildet, dass es nur möglich ist, diese in Axialrichtung miteinander zu koppeln. Die Axialrichtung kann daher als Kopplungsrichtung bezeichnet werden.

Die Kupplung und/oder die Steckeinrichtung können zur Führung in Kopplungsrichtung Kopplungsführungsabschnitte aufweisen, die dazu ausgebildet sind, die Kupplung und die Steckeinrichtung während des Koppelns ausschließlich in Axialrichtung zueinander zu führen und Bewegungen in Radialrichtung relativ zueinander zu unterbinden. Diese Kopplungsführungsabschnitte können gemäß einer nach DIN EN 62196 spezifizierten Steckverbindung ausgebildet sein.

Mit Vorteil ist es so möglich, die Elemente der Steckverbindung in einer einzigen Ausrichtung miteinander zu koppeln, wodurch ein inkorrektes Koppeln der Steckverbindung durch die Bedienperson verhindert werden kann und damit elektrische Schäden an einer gekoppelten Ladereinrichtung und oder dem gekoppelten Fahrzeug vermieden werden.

In der ersten, geschlossenen Stellung bedeckt das mindestens eine Blendenelement die Buchse vollständig, das heißt derart, dass eine Bedienperson der Steckverbindung beispielsweise mit ihren Fingern oder einem Fremdgegenstand die stromführende Buchse nicht berühren kann. Die Bedienperson wird damit sicher vor einem elektrischen Schlag bei versehentlicher Berührung der stromleitenden Buchsen geschützt.

In der zweiten, geöffneten Stellung ist das Blendenelement so positioniert, dass der mindestens eine Stift in physischem Kontakt mit der mindestens einen Buchse steht, so dass eine elektrische Verbindung zwischen der Kupplung und der Steckeinrichtung hergestellt wird. Bevorzugt umgibt die Buchse den Stift in der zweiten, geöffneten Stellung mindestens teilweise außenumfangsseitig, wobei die Buchse den Stift mindestens in radialer Richtung außenumfangsseitig elektrisch kontaktiert.

Das Ineinandergreifen des mindestens einen Stifts mit dem mindestens einen Blendenelement erfolgt bevorzugt durch einen physischen Kontakt mit einer stirnseitigen Oberfläche am freien Ende des Stifts und einer in Kopplungsrichtung ausgerichteten Oberfläche des Blendenelements.

Während der Bewegung der Steckeinrichtung in Kopplungsrichtung zur Kupplung können die stirnseitige Oberfläche am freien Ende des Stifts und die Oberfläche des Blendenelements in Kopplungsrichtung einen gleitendenden, bewegten oder feststehenden, unbewegten mechanischen Kontakt relativ zueinander ausüben.

Mit weiterem Vorteil ist die Bewegung des Blendenelements in die zweite, geöffnete Stellung in Radialrichtung und/oder in Axialrichtung ausgerichtet. Die Bewegung des Blendenelements kann auch nur ausschließlich radial oder ausschließlich axial erfolgen. Ferner ist es denkbar, dass die Bewegung des Blendenelements eine Kombination aus einer radialen und einer axialen Bewegung besteht.

Bei einer ausschließlich eindimensionalen, axialen Bewegung des Blendenelements von der ersten, geschlossenen Stellung in die zweite, geöffnete Stellung kann das Blendenelement im Wesentlichen zylindrisch ausgebildet sein und während der Bewegung von der ersten, geschlossenen Stellung in die zweite, geöffnete Stellung in Radialrichtung von der Buchse geführt werden. Vorzugsweise ist der Durchmesser des Blendenelements dabei geringer als der Durchmesser der Buchse, um ein ausreichendes Spiel in Radialrichtung zur Buchse zuzulassen, so dass ein kraftarmes Koppeln der Steckverbindung gewährleistet wird. Bei einer zylindrischen Ausbildung des Blendenelements ist von Vorteil, wenn das Blendenelement im ersten, geschlossenen Zustand über die Buchse in Axialrichtung hinausragt. Hierdurch kann ein unbeabsichtigtes, stirnseitiges Kontaktieren der Buchse vermieden werden.

Bei einer eindimensionalen Bewegungsrichtung wie ausschließlich in Radial- oder ausschließlich in Axialrichtung kann das Blendenelement einfach und kostenoptimiert dadurch realisiert werden, dass das Blendenelement oder ein zugehöriger Bewegungsmechanismus nur in einer Bewegungsrichtung gelagert werden muss. Dies vereinfacht den mechanischen Aufbau einer Führung oder Lagerung und steigert deren Zuverlässigkeit.

Eine Kombination der Bewegungsrichtungen des Blendenelements in Radial- und in Axialrichtung erhöht einerseits die Komplexität des Blendenelements oder dessen zugehörigen Bewegungsmechanismus und deren jeweilige Lagerung. Andererseits wird hierdurch die Sicherheit der physischen Abdeckung der stromführenden Kontakte erhöht, da ein Fremdgegenstand derart bezüglich des Blendenelements geführt werden muss, um die entsprechende Bewegung des Blendenelements in den zweiten, geöffneten Zustand zu erzwingen.

Bevorzugt weist das Blendenelement mindestens einen Führungsabschnitt auf, der dazu eingerichtet ist, die Bewegung des mindestens einen Stifts in Kopplungsrichtung in die Bewegung des Blendenelements in die zweite, geöffnete Stellung zu überführen.

Der Führungsabschnitt kann als eine Erhebung auf oder als eine Vertiefung in dem Blendeelement vorgesehen sein. Bevorzugt ist der Führungsabschnitt derart ausgebildet, dass eine gleitende Relativbewegung zwischen dem Blendenelement und dem jeweiligen Stift, insbesondere dessen Stirnseite, die an dem freien Ende des Stifts definiert ist, erzwungen oder vornehmlich begünstigt wird. Alternativ kann der Führungsabschnitt derart ausgebildet sein, dass eine Relativbewegung zwischen dem jeweiligen Stift und dem Blendenelement verhindert wird. Eine solche Bewegungsbeschränkung kann sich beispielsweise mittels einer formschlüssigen Ausgestaltung des Führungsabschnitts bezüglich des Stifts einstellen. Alternativ kann eine solche Bewegungsbeschränkung mithilfe von Abschrägungen oder Fasen im Führungsabschnitt erzeugt werden, die den Stift zentrieren.

Bevorzugt ist der Führungsabschnitt im Mittelpunkt des mindestens einen Blendenelements angeordnet.

Wenn ausschließlich ein Blendenelement pro Buchse vorgesehen ist, das dazu eingerichtet ist, ausschließlich axial bewegt zu werden, ist der Führungsabschnitt im geometrischen Mittelpunkt angeordnet. Zusätzlich oder alternativ dazu kann in dem zuvor genannten Fall der Führungsabschnitt als eine konische und/oder kegelförmige Vertiefung ausgebildet sein, die mit einer abgerundeten Stirnfläche des Stifts beim Koppeln der Steckverbindung zusammenwirkt. Sofern das Blendenelement ausschließlich eindimensional, in Axialrichtung bewegbar ist, führt der Führungsabschnitt bevorzugt den Stift unter ständigem Kontakt von der ersten, geschlossenen Position bis in die zweite, geöffnete Position. Folglich wird das Fügen der Steckvorrichtung erleichtert, da die Stifte mittels dem konischen Führungsabschnitt axial zur Buchse ausgerichtet werden.

Wenn der Führungsabschnitt als konische und/oder kegelförmige Vertiefung ausgebildet ist, ist es weiterhin von Vorteil, dass der Führungsabschnitt in Axialrichtung in einer Querschnitt-Seitenansicht spitz zulaufend ist. Vorzugsweise beträgt bei einer konischen und/oder kegelförmigen Ausbildung des Führungsabschnitts ein Öffnungswinkel desselben weniger als 90°. Mittels dieser beiden vorgeschlagenen Maßnahmen wird bewirkt, dass Fremdgegenstände wie beispielsweise Schraubendreher, die zu manipulativen Zwecken auf das Blendenelement aufgesetzt werden, bei der Bewegung von der ersten, geschlossenen Stellung in die zweite, geöffnete Stellung im Führungsabschnitt zentriert werden und nicht die elektrisch leitende, innere Mantelfläche Buchse kontaktieren und die manipulierende Person damit vor einem elektrischen Schlag bewahren.

Wenn der Führungsabschnitt als konische und/oder kegelförmige Vertiefung ausgebildet ist, kann dieser sich mit Vorzug in Axialrichtung bzw. in Kopplungsrichtung über die Hälfte der Höhe des Blendenelements hinweg erstrecken. Hiermit wird bei Manipulation mittels eines Fremdgegenstands dieser effektiv zentriert und mittels des Führungsabschnitts von der elektrisch leitenden inneren Mantelfläche der Buchse isoliert.

Ferner erstreckt sich der Führungsabschnitt vorzugsweise über einen Großteil der Stirnfläche des Blendenelements, wodurch einerseits der Stift bei einer Bewegung des Blendenelements in die zweite, geöffnete Stellung optimal zur Buchse zentriert und geführt wird und andererseits Fremdgegenstände von der elektrisch leitenden, inneren Mantelfläche der Buchse zu deren Mitte hin abgeleitet bzw. zentriert werden und dabei die manipulierende Person vor einem elektrischen Schlag schützt.

Damit wird bei der erfindungsgemäßen Steckverbindung sichergestellt, dass bei Kopplung der Elemente der Steckverbindung allein die Bewegung des Stifts das Blendenelement in die zweite, geöffnete Stellung überführt und damit einen stromführenden Kontakt zwischen der Buchse und dem Stift herstellt. Darüber hinaus wird die Sicherheit der Steckverbindung erhöht und die Bedienperson der Steckverbindung vor einem elektrischen Schlag geschützt.

Besonders bevorzugt ist der Führungsabschnitt als Vertiefung in dem mindestens einen Blendenelement ausgebildet und dazu eingerichtet, mindestens einen Stift in Axial- und/oder Radialrichtung bezüglich der mindestens einen Buchse zu führen.

Es wird hierdurch eine weitere Führung vorgeschlagen, die mithilfe einer Führung der Stifte im den jeweiligen Führungsabschnitten ein sicheres und einfaches Koppeln der Elemente der Steckverbindung ermöglicht und damit die Führung der Kupplung in Axialrichtung ab dem ersten Kontakt des Stifts mit dem Blendenelement gewährleistet.

Mit weiterem Vorteil kann der Führungsabschnitt dazu ausgebildet sein, die Längsachse des Stifts der Steckeinrichtung zu einer Längsachse der Buchse der Kupplung auszurichten.

Als Längsachse eines Elements kann dessen Haupterstreckungsrichtung angegeben werden. Falls Elemente eine zylindrische Ausprägung aufweisen, kann die Zylinderachse als Haupterstreckungsrichtung bezeichnet werden.

Durch die Ausrichtung sowie Zentrierung des Stifts relativ zur Buchse mithilfe des Führungsabschnitts kann ein klemmfreies und kraftarmes Fügen der Steckverbindung erreicht werden. Weiter besteht ein Vorteil darin, dass selbst Fremdgegenstände im Führungsabschnitt zentriert werden, wodurch ein umfangsseitiges Kontaktieren der stromführenden Buchse erschwert oder vollständig verhindert werden kann. Somit kann die Sicherheit der Bedienperson vor einem elektrischen Schlag selbst bei einer Manipulation der Bewegung der Blendenelemente mittels eines Fremdgegenstands erhöht werden.

Bevorzugt wird das mindestens eine Blendenelement von einer vorbestimmten Rückstellkraft mindestens eines elastischen Elements in der ersten, geschlossenen Stellung gehalten. Vorzugsweise ist einem Blendenelement genau ein elastisches Element zugeordnet, so dass eine individuelle Rückstellung des jeweiligen Blendenelements ermöglicht ist.

Durch die Summe der Rückstellkräfte von mehreren Blendenelementen kann eine Kopplungskraft definiert werden, die zur Kopplung der Elemente der Steckverbindung überwunden werden muss. Hierdurch wird beispielsweise sichergestellt, dass eine unbeabsichtigte Verwendung oder Kopplung der Steckverbindung verhindert wird. Damit kann beispielsweise unterbunden werden, dass Kinder die Steckverbindung unsachgemäß oder unbeaufsichtigt koppeln. Durch die auf die Blendenelemente wirkende Rückstellkraft wird eine unbeabsichtigte Manipulation der Bewegung der Blendenelemente weitgehend verhindert und so die Sicherheit der Steckverbindung für Bedienpersonen gesteigert.

Das elastische Element ist bevorzugt ein metallisches Federelement, besonders bevorzugt eine metallische Spiralfeder. Alternativ kann das elastische Element einen Kunststoff oder einen Verbundwerkstoff damit aufweisen, der als ein Federelement ausgebildet ist. Andernfalls oder zusätzlich kann das elastische Element aus einem Werkstoff bestehen, der komprimierbar ist, zum Beispiel ein Elastomer oder ein Schaumstoff. Das elastische Element kann das Blendenelement in Radialrichtung mindestens teilweise außenumfangsseitig umgeben, wenn das Blendenelement ausschließlich in Radialrichtung bezüglich der Buchse bewegbar ist. Besonders bevorzugt ist das elastische Element in Axialrichtung unter dem Blendenelement angeordnet, wenn das Blendenelement ausschließlich in Axialrichtung bewegbar ist. Dabei erstreckt sich das elastische Element vorzugsweise in dessen Haupterstreckungsrichtung in Axialrichtung bzw. in der Kopplungsrichtung. Vorzugsweise ist bei einer axialen Erstreckung des elastischen Elements in Axialrichtung zwischen einem Boden der Buchse und dem Blendenelement angeordnet und in dieser Richtung elastisch verformbar. Es ist ebenfalls denkbar, dass das elastische Element in einem Gelenk des Blendenelements positioniert ist, wenn dieses in Axial- und in Radialrichtung bezüglich der Buchse bewegbar ist.

Mit besonderem Vorteil weist jede Buchse eine Hülse aus elektrisch isolierendem Material auf, die integral mit der Kupplung ausgebildet ist.

Vorzugsweise ist ein stirnseitiger Abschnitt der Hülse bündig mit der Stirnseite des Blendenelements im ersten, geschlossenen Zustand angeordnet, wenn das Blendenelement zylindrisch ausgebildet ist und eindimensional in Axialrichtung bewegbar ist. Hierdurch kann eine planare, stirnseitige Oberfläche bereitgestellt werden, wobei des Blendenelement vor äußeren Krafteinflüssen in Radialrichtung geschützt ist. Fernerhin ist es vorgesehen, dass bei einer zuvor beschriebenen zylindrischen Ausbildung des Blendenelements, das Blendenelement im zweiten, geöffneten Zustand sich in Axialrichtung vollständig innerhalb der Buchse befindet, womit ein besonders einfacher Aufbau der Kupplung erzielt wird.

Das elastische Element wird vorzugsweise von dem Blendenelement, der Hülse und/oder der Kupplung derart umgeben, dass das elastische Element nicht von außerhalb zugänglich ist. Das elastische Element wird dadurch vor Beschädigungen und Umwelteinflüssen geschützt.

Die Kupplung weist vorzugsweise freistehende Buchsen auf, die jeweils von einer Hülse umgeben sind. Diese Hülsen verhindern ein Kontaktieren der Buchse von der Außenumfangsseite der Buchse. Zusätzlich dienen die Hülsen als Führung und greifen formschlüssig in Vertiefungen der Steckeinrichtung ein, in denen die Stifte der Steckeinrichtungen angeordnet sind. Damit kann ferner eine verbesserte Führung in Kopplungsrichtung bei Kopplung der Steckverbindung erreicht werden. Zudem werden die Buchsen dadurch vor Beschädigungen wie einem Verbiegen und der Korrosion geschützt.

Mit Vorteil begrenzt die Kupplung, die Buchse oder die Hülse die Bewegung des Blendenelements in der ersten, geschlossenen Stellung und/oder in der zweiten, geöffneten Stellung.

Besonders bevorzugt begrenzt die Hülse das Blendenelement in der ersten, geschlossenen Stellung und die Buchse das Blendenelemente in der zweiten, geöffneten Stellung, wenn das Blendenelement ausschließlich in Axialrichtung bezüglich der Buchse bewegbar ist. Alternativ begrenzt die Hülse das Blendenelement mindestens in der zweiten, geöffneten Stellung, wenn das Blendenelement nicht mehr als in Radialrichtung bezüglich der Buchse bewegbar ist. Zusätzlich kann bei einer ausschließlichen Bewegung in Radialrichtung das Blendeelement in der ersten, geschlossenen Stellung durch die Hülse begrenzt werden. Es ist weiter vorstellbar, dass das Blendenelement zusätzlich in der ersten, geschlossenen Stellung von der Buchse begrenzt wird, wenn sich das Blendenelement nur in Radialrichtung bezüglich der Buchse bewegbar ist.

Vorzugsweise kann das Blendenelement Begrenzungsabschnitte aufweisen, die mit korrespondierenden Begrenzungsabschnitten der Kupplung, der Hülse und/oder der Buchse eingreifen und somit das Blendenelement entsprechend in der ersten, geschlossenen oder in der zweiten, geöffneten Stellung begrenzen. Die Bewegung des Blendenelements kann daher bei einer eindimensionalen Drehbewegung des Blendenelements in Radialrichtung bezüglich der Buchse durch einen Winkel zwischen dem ersten, geschlossenen und dem zweiten, geöffneten Zustand definiert sein. Bevorzugt beträgt dieser Winkel 20° bis 30°, besonders bevorzugt 24°. Bei einer eindimensionalen linearen Bewegung in Axialrichtung bezüglich der Buchse kann die Bewegung durch eine Wegstrecke zwischen dem ersten, geschlossenen und dem zweiten, geöffneten Zustand definiert sein. Besonders bevorzugt können diese Begrenzungsabschnitte als Ausschnitte der Buchse oder als Nuten der Kupplung ausgebildet sein, wenn das Blendenelement ausschließlich in Axialrichtung bewegbar ist. Die Begrenzungsabschnitte des Blendenelements können sich zusätzlich oder alternativ dabei in die korrespondierenden Begrenzungsabschnitte der Kupplung, der Hülse und/oder der Buchse hinein oder durch diese hindurch erstrecken.

Damit kann das Blendenelement sicher in der Buchse gehalten und die Bewegung des Blendenelements in der ersten, geschlossenen Stellung und in der zweiten, geöffneten Stellung begrenzt werden. Auf diese Weise wird ein Bewegungsbereich definiert. Des Wieteren kann in Kombination mit dem elastischen Element die erste, geschlossene Stellung des Blendenelements definiert werden, in der das Blendenelement zurückgestellt wird.

Die Bewegung des Blendenelements in die zweite, geöffnete Stellung ist vorteilhaft mindestens teilweise von der Buchse geführt. Besonders bevorzugt wird das Blendenelement beweglich in Axialrichtung von der Buchse geführt. Es ist daher vorstellbar, dass das Blendenelement mindestens teilweise umfangsseitig von der Buchse umgeben ist. Ferner ist daher denkbar, dass das Blendenelement mindestens einen Abschnitt aufweist, der derart ausgebildet ist, um von der Buchse in Axialrichtung bewegbar geführt zu werden. Damit kann eine einfache kostengünstige Linearführung zur Führung der Bewegung des Blendenelements in Axialrichtung bereitgestellt werden.

Mit weiterem Nutzen weist die Hülse einen Abschnitt auf, der die Stirnseite der Buchse umgibt. Die Hülse kann derart gestaltet sein, dass diese die Stirnseite der Buchse bedeckt, also den Abschnitt der Buchse, der ein stromführendes Material aufweist, so dass ein Kontaktieren der stromführenden Stirnseite der Buchse in der ersten, geschlossenen Stellung des Blendenelements mit oder ohne Fremdgegenstand ausgeschlossen ist. Damit kann die Sicherheit bei Benutzung der Steckverbindung weiter erhöht werden.

Mit Vorteil weist die Kupplung, insbesondere die Hülse, mindestens einen ersten Gleitabschnitt und das Blendenelement entsprechend mindestens einen zweiten Gleitabschnitt derart auf, dass das Blendenelement in Axial- oder in Radialrichtung zur Buchse geführt ist. Die Gleitabschnitte dienen dazu, das Blendenelement linear oder rotatorisch zu führen beziehungsweise beweglich zu lagern. Diese Lagerung ist besonders bevorzugt als ein Gleitlager ausgeführt.

Weiterhin ist bevorzugt der Abschnitt der Hülse, der allein die stromführende Stirnseite der Buchse umgibt, derart ausgebildet, um den Stift axial bezüglich der Buchse zu führen und zu zentrieren.

Falls das Blendenelement mindestens teilweise von der Buchse geführt wird und diese eine Hülse aufweist, die mindestens die stromführende Stirnseite der Buchse umgibt, ist es vorstellbar, dass die Hülse in einem Bereich, in dem diese die Stirnseite der Buchse umgibt, das Blendenelement zumindest in der ersten, geschlossenen Stellung axial bezüglich der Buchse führt und zentriert. Hierdurch kann die erste, geschlossene Stellung des Blendenelements weiter definiert werden, wobei das Blendenelement stets in einem vorbestimmten Zustand bei Nichtkopplung der Steckverbindung positioniert ist. Damit wird das Koppeln der Elemente der Steckverbindung für die Bedienperson erleichtert, da ein Verkanten des Blendenelements in der ersten, geschlossenen Stellung vermieden wird.

Bevorzugt ist einer Buchse eine Mehrzahl von Blendenelementen zugeordnet, die durch den mindestens einen ersten Gleitabschnitt beweglich gelagert sind.

Hierbei kann der zweite Gleitabschnitt des Blendenelements in Kontakt mit einem zweiten Gleitabschnitt eines weiteren Blendenelements stehen, das derselben Buchse zugeordnet ist. Zudem ist es denkbar, dass die Blendenelemente einer Buchse in unterschiedliche Richtungen oder dieselbe Richtung beweglich gelagert sind. Besonders bevorzugt sind die Blendenelemente in derselben Bewegungsrichtung linear oder drehbeweglich gelagert. Vorzugsweise sind die Blendenelemente derart geführt, dass diese gemeinsam die Buchse in der ersten, geschlossenen Stellung verschließen und in der zweiten, geöffneten Stellung freigeben.

Weiterhin kann ein Teil der Blendenelemente, die einer Buchse zugeordnet sind, in Axialrichtung bezüglich der Buchse übereinander, das heißt in einer gestapelten Weise, angeordnet sein. Besonders bevorzugt erstrecken sich die Blendenelemente in einer gemeinsamen Ebene, die durch den ersten Gleitabschnitt gebildet wird.

Mittels einer Mehrzahl von Blendenelementen, die einer Buchse zugeordnet sind, können in einer kompakten Bauweise größere Buchsendurchmesser physisch abgedeckt werden. Es wird hiermit eine Steckverbindung vorgeschlagen, die es selbst bei einem kleinen Bauraum ermöglicht, einen breiten Bereich von Buchsendurchmessern mechanisch abzudecken.

Vorteilhafterweise ist die Buchse von dem Abschnitt der stirnabdeckenden Hülse mindestens teilweise in der Radial- und/oder der Axialrichtung beabstandet ist. Dadurch kann bei einer Manipulation des Blendenelements keine sofortige stromführende Kontaktierung hergestellt werden. Damit wird des Weiteren sichergestellt, dass die Bedienperson bei einer unbeabsichtigten Manipulation des Blendenelements keine stromführende Verbindung mit der Buchse aufbauen kann und damit keinen Stromschlag erleidet. Denn erst ab einem vorbestimmten Fügeweg in Kopplungsrichtung werden die Elemente der Steckverbindung stromführend koppelt.

Für den Fall, dass das Blendenelement mit einem Führungsabschnitt mindestens teilweise von der Buchse in Axialrichtung bezüglich dieser geführt wird und die Hülse einen Abschnitt aufweist, der die stromführenden Stirnseite der Buchse umgibt, wird selbst bei einer absichtlichen Manipulation des Blendenelements in die zweite, geöffnete Stellung mit einem Fremdgegenstand wie einem Nagel eine stromführende Kontaktierung der Buchse verhindert, weil der Fremdgegenstand im Blendenelement zentriert wird. Sogar bei einer Schrägstellung des Fremdgegenstands in der Buchse kann dieser nicht in stromführenden Kontakt mit der Buchse gelangen, da die Buchse von der stirnabdeckenden Hülse beabstandet ist, so dass der Fremdkörper lediglich in Kontakt mit dem elektrisch isolierenden Hülsenabschnitt gerät.

Durch den Abstand der Buchse zur stirnabdeckenden Hülse, der oben vorgeschlagen wurde, wird die Sicherheit der Bedienperson vor einem elektrischen Schlag weiter gesteigert.

Weiterhin ist es vorteilhaft, wenn die Bewegung des Blendenelements in die zweite, geöffnete Stellung um eine Drehachse erfolgt, die sich von der Zylinderachse der Buchse unterscheidet.

Das Blendenelement kann bei einer ausschließlich radialen Bewegung bezüglich des Blendenelements um eine Drehachse geschwenkt werden. Die Drehachse ist bevorzugt parallel zur Zylinderachse der Buchse ausgerichtet. Alternativ kann das Blendenelement bei einer Kombination aus einer radialen und einer axialen Bewegung bezüglich der Buchse um eine Drehachse geschwenkt werden, die in einem Winkel zur Zylinderachse der Buchse steht.

Mit besonderem Vorteil erfolgt die Bewegung des Blendenelements in die zweite, geöffnete Stellung um eine Drehachse, die der Zylinderachse einer nicht stromführenden Schutzleiterbuchse entspricht.

Besonders bevorzugt überdeckt ein Blendenelement eine Mehrzahl von Buchsen, wobei der erste Gleitabschnitt außenumfangsseitig an der Hülse der vorbestimmten Buchse vorgesehen ist und der zweite Gleitabschnitt des Blendenelements diesen umgibt, so dass eine drehbare Lagerung um die Schutzleiterbuchse herum bereitgestellt wird.

Die nicht stromführenden Schutzleiterbuchse der Kupplung ist vorzugsweise sowohl in der ersten, geschlossenen Stellung des Blendenelements als auch in der zweiten, geöffneten Stellung des Blendenelements von dem Blendenelement freigegeben.

Damit wird genau ein Blendenelement vorgeschlagen, das eine Mehrzahl oder vorzugsweise alle Buchsen, mit Ausnahme der Schutzleiterbuchse, physisch bedeckt und damit einfach herzustellen ist.

Weitere Eigenschaften und Vorzüge der vorliegenden Erfindung ergeben sich aus den beigefügten Figuren und Ausführungsbeispielen, in denen:
- Fig. 1: eine schematische, stirnseitige Vorderansicht einer Kupplung der erfindungsgemäßen Steckverbindung gemäß einer ersten Ausführungsform;
- Fig. 2: eine schematische Querschnitt-Seitenansicht einer Buchse der erfindungsgemäßen ersten Ausführungsform gemäß Fig. 1;
- Fig. 3: eine schematische, stirnseitige Vorderansicht einer Kupplung als ein anderes Beispiel einer Steckverbindung gemäß einer exemplarischen, zweiten Ausführungsform;
- Fig. 4: eine schematische Querschnitt-Seitenansicht mehrerer Variationen von Anordnungen von Blendenelementen und elastischen Elementen als ein weiteres Beispiel der exemplarischen, zweiten Ausführungsform gemäß Fig. 3;
- Fig. 5: eine schematische, stirnseitige Vorderansicht als ein weiteres Beispiel einer Kupplung ohne Blendenelement gemäß einer exemplarischen, dritten Ausführungsform;
- Fig. 6: eine schematische Draufsicht auf ein Blendenelement der exemplarischen, dritten Ausführungsform gemäß Fig. 5;
- Fig. 7: eine schematische, stirnseitige Vorderansicht eines Blendenelements der exemplarischen, dritten Ausführungsform; und
- Fig. 8: eine schematische, stirnseitige Vorderansicht einer Kupplung als zusätzliches Beispiel der beispielhaften Steckverbindung gemäß der exemplarischen, dritten Ausführungsform darstellt.

In den nachfolgend beschriebenen Figuren sind die Bezugszeichen für identische Elemente nicht wiederholt eingefügt, um die Verständlichkeit und die Übersichtlichkeit der Darstelllungen zu gewährleisten. Grundsätzlich sei angemerkt, dass die vorliegende Erfindung sich nicht allein auf eine im Anschluss beschriebene Ausführungsform oder Variation innerhalb dieser beschränkt. Es ist für einen Fachmann des technischen Gebiets in zweckdienlicher Weise vorstellbar, einzelne Merkmale der vorgestellten Ausführungsformen zu kombinieren und damit neue, hier nicht erläuterte Ausführungsformen zu entwerfen.

### Erste erfindungsgemäße Ausführungsform

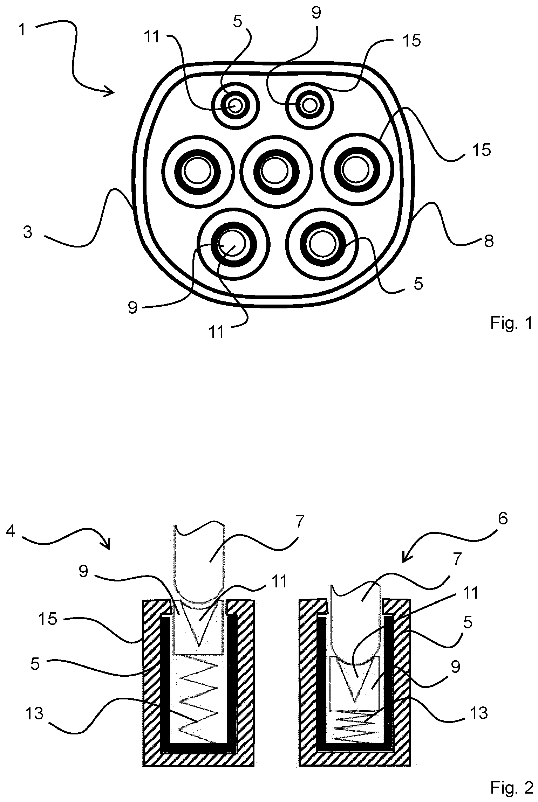

Fig. 1 zeigt eine stirnseitige Vorderansicht einer ersten, bevorzugten Ausführungsform einer Kupplung 3 einer erfindungsgemäßen Steckverbindung 1 mit sechs stromführenden Buchsen 5 und einem Schutzkontakt. Die Anordnung und Dimensionierung der Buchsen 5 sowie die räumliche Ausprägung der Kupplung 3 entspricht hier einer Typ-2 Steckverbindung nach IEC 62196-2-X. Bei jeder Buchse 5, die wie hier gezeigt unterschiedlich dimensioniert sein können, ist ein Blendenelement 9 vorgesehen, das innerhalb der Buchse 5 angeordnet ist. Das Blendenelement 9 ist in seiner Längsrichtung zylindrisch ausgebildet und seine Längsachse bzw. Zylinderachse ist mit der Zylinderachse der Buchse 5 ausgerichtet bzw. identisch. Das Blendenelement 9 weist dabei einen gegenüber der Buchse 5 geringeren Durchmesser auf, um ein ausreichendes Spiel in Radialrichtung zwischen der Buchse 5 und dem Blendenelement 9 zu gewährleisten. Das Blendenelement 9 wird damit von der Buchse 5 in Bewegungsrichtung, d.h. in die Darstellungsebene hinein, geführt. Die Buchsen 5 sind jeweils von einer Hülse 15 vollständig außenumfangsseitig umgeben. Schließlich weist die Kupplung 3 einen Kopplungsführungsabschnitt 8 auf, der als Steg ausgebildet und dazu eingerichtet ist, mit einer entsprechenden Nut der Steckeinrichtung ineinanderzugreifen, damit die Elemente der Steckverbindung 1 beim Koppeln nur in Axialrichtung relativ zueinander bewegt werden können. Jedes Blendenelement 9 weist in dieser Ausführungsform genau einen Führungsabschnitt 11 auf. Der Führungsabschnitt 11 ist relativ zur Zylinderachse des zylinderförmigen Blendenelements 9 und der Zylinderachse der Buchse 5 zentriert, sprich der Mittelpunkt des Führungsabschnitts 11 liegt auf der Zylinderachse des zylinderförmigen Blendenelements 9 und der Zylinderachse der Buchse 5.

Fig. 2 präsentiert eine schematische Querschnitt-Seitenansicht von zwei Buchsen 5 aus Fig. 1 in unterschiedlichen Zuständen bzw. Stellungen. Das Blendenelement 9 der linken Buchse 5 befindet sich in der ersten, geschlossenen Stellung 4, wobei das Blendenelement 9 die Buchse 5 in Höhenrichtung, also in Haupterstreckungsrichtung, die Buchse 5 überragt und teilweise bündig mit einem Endabschnitt der Hülse 15 abschließt. Die Buchse 5 ist vollständig von der Hülse 15 und dem Blendenelement 9 nach außen hin umgeben.

Das Blendenelement 9 weist des Weiteren einen Führungsabschnitt 11 auf, der in dieser Ausführungsform konusförmig ausgebildet ist. Der Stift 7 der Steckeinrichtung ist an dessen freien Ende abgerundet, wodurch der Stift 7 durch den Führungsabschnitt 11 zentriert wird. Der Führungsabschnitt 11 erstreckt sich über einen Großteil der Stirnfläche des Blendenelements 9, das heißt, die Fläche des Führungsabschnitts 11 beträgt mehr als die Hälfte der Stirnfläche des Blendenelements.

Weiter ist in Fig. 2 zu erkennen, dass der Konus bzw. hier der Kegel des Führungsabschnitts 11 in Axialrichtung bzw. in Kopplungsrichtung spitz zuläuft, was bedeutet, dass der Öffnungswinkel weniger als 90° beträgt. Der Führungsabschnitt 11 erstreckt sich in das Blendenelement 9 in Axialrichtung über die Hälfte der Höhe des Blendenelements 9 in dieses hinein. Die verbleibende planare Stirnfläche des Blendenelements 9 ist dabei im Verhältnis zum Führungsabschnitt 11 klein, das heißt, sie beträgt weniger als die Hälfte der Stirnfläche des Blendenelements 9.

Das elastische Element 13 ist in dieser Ausführungsform eine metallische Spiralfeder, die eine vorbestimmte, wegabhängige Rückstellkraft auf das Blendenelement 9 ausübt und das Blendenelement 9 in der ersten, geschlossenen Stellung 4 hält. Die Spiralfeder ist in Axialrichtung dabei zwischen einem Boden der Buchse 5 und einer unteren Stirnfläche des Blendenelements 9 angeordnet. Der Abschnitt der Hülse 15, der die stromführende Stirnseite der Buchse 5 in Kopplungsrichtung bedeckt, ragt in Radialrichtung über die stromführende Stirnseite der Buchse 5 hinaus und in den Innenraum der Buchse 5 hinein. Weiterhin ist die Buchse 5 von dem stirnseitigen Abschnitt der Hülse 15 in Axialrichtung beabstandet.

Die in Fig. 2 rechts dargestellte Buchse 5 befindet sich in der zweiten, geöffneten Stellung 6. Die Bewegung in die zweite, geöffnete Stellung 6 erfolgt ausschließlich linear in Axialrichtung bezüglich der Buchse 5. Das elastische Element 13 ist dabei derart komprimiert, dass das Blendenelement 9 sich vollständig im Innenraum der Buchse 5 befindet. In der zweiten, geöffneten Stellung kontaktiert die Buchse 5 den Stift 7 teilweise außenumfangsseitig. Wodurch eine stromführende Verbindung ermöglicht wird.

### Zweite, exemplarische Ausführungsform

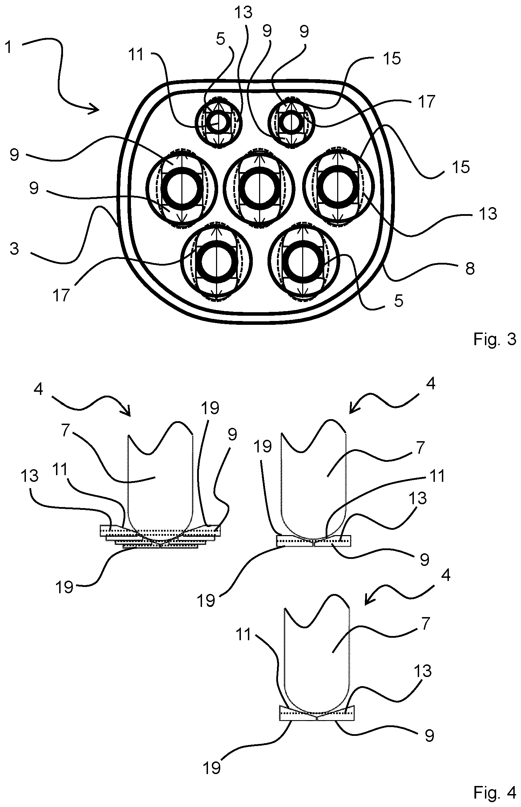

Fig. 3 stellt eine schematische, stirnseitige Vorderansicht einer zweiten, exemplarischen Ausführungsform einer beispielhaften Kupplung 3 einer Steckverbindung 1 dar. Die Buchsen 5 der Kupplung 3 sowie die Dimensionierung der Kupplung 3 im Allgemeinen entspricht in dieser anderen, zu Erklärungszwecken vorgesehen Ausführungsform ebenfalls einer Typ-2 Steckverbindung nach IEC 62196-2-X. Die Blendenelemente 9 sind jedoch in diesem exemplarischen Ausführungsbeispiel allein in Radialrichtung bezüglich der Buchse 5 bewegbar angeordnet. Die Blendenelemente 9 werden außenumfangsseitig von einem ringförmigen elastischen Element 13, das hier als eine metallische Ringfeder dargestellt ist, in der ersten, geschlossenen Stellung 4 gehalten. In Fig. 3 befinden sich die dargestellten Blendenelementen 9 in der zweiten, geöffneten Stellung 6. Die Blendenelemente 9 werden jeweils mittels eines ersten Gleitabschnitts 17 geführt, der sich jeweils innerhalb der Hülse 15 befindet und die Blendenelemente 9 teilweise in Axial- und in Radialrichtung umgibt. Der erste Gleitabschnitt 17 ist insbesondere in dem Abschnitt der Buchse 9 ausgebildet, der die stromführende Stirnseite der Buchse 5 in Axialrichtung bedeckt. Der zweite Gleitabschnitt 19 ist jeweils teilweise außenumfangsseitig an dem plattenförmigen Blendenelement 9 sowie auf dessen Ober- und Unterseite ausgebildet.

Fig. 4 ist eine schematische Querschnitt-Seitenansicht mehrerer Variationen von Anordnungen von weiteren Beispielen von Blendenelementen 9 und von elastischen Elementen 13 der zweiten, exemplarischen Ausführungsform einer Kupplung 3 gemäß Fig. 3. Es sind in einer ersten Variation auf der linken oberen Seite der Darstellung mehrere Blendenelemente 9 in Axialrichtung bezüglich der Buchse 5 übereinander in Höhenrichtung angeordnet, die sich teilweise in Radialrichtung gegenseitig überlappen. Die Blendenelemente 9 sind in der dargestellten Ausführungsform jeweils identisch zueinander. In jeder übereinander gestapelten Etage werden die Blendenelemente 9 jeweils von einem elastischen Element 13 in der ersten, geschlossenen Stellung 4 gehalten. Die zweiten Gleitabschnitte 19 dieser ersten, beispielhaften Variante sind im Vergleich zu Fig. 3 teilweise auf der Außenumfangsseite und auf deren Ober- und Unterseite der plattenförmigen Blendenelemente 9 ausgebildet. Die Blendenelemente 9 weisen jeweils Führungsabschnitte 11 auf, die hier als Abschrägung ausgebildet sind und den Stift 7 in Radialrichtung zentrieren.

Auf der rechten oberen Seite der Fig. 4 ist eine zweite, beispielhafte Variante einer Anordnung von zwei Blendenelementen 9 dargestellt, die in einer gemeinsamen Ebene positioniert sind. Die Führungsabschnitte 11 sind wie in der ersten, beispielhaften Variante als Abschrägung ausgebildet. Im rechten unteren Bereich der Fig. 4 ist eine dritte, beispielhafte Variante der Anordnung basierend auf der zweiten, beispielhaften Variante dargestellt, wobei die Führungsabschnitte 11 sich über die gesamte Breite des Blendenelements erstrecken.

### Dritte, exemplarische Ausführungsform

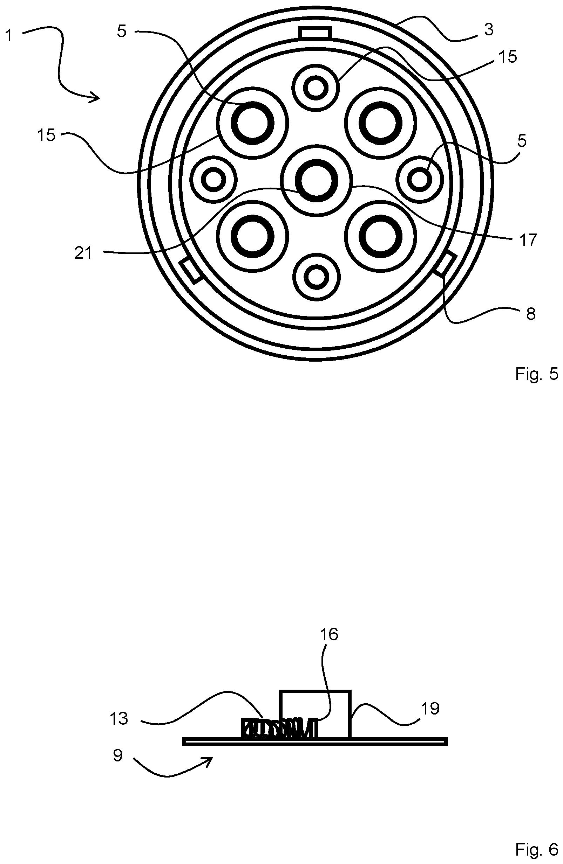

Fig. 5 ist eine schematische, stirnseitige Vorderansicht einer dritten, exemplarischen Ausführungsform eines anderen Beispiels einer Kupplung 3 einer Steckverbindung 1 ohne Blendenelement 9. Wie auch die Kupplungen 3 der ersten erfindungsgemäßen und zweiten, exemplarischen Ausführungsformen umfasst die Kupplung 3 der dritten, exemplarischen Ausführungsform stromführende Buchsen 5, die vollständig außenumfangsseitig von einer Hülse 15 umgeben sind. Die Kupplung 3 der dritten, exemplarischen Ausführungsform umfasst eine Schutzleiterbuchse 21, die zentral in der stirnseitigen Darstellung angeordnet ist. Die Hülse 15 der Schutzleiterbuchse 21 ist als ein erster Gleitabschnitt 17 ausgebildet, der dazu eingerichtet ist, das Blendenelement 9 drehbar zu lagern. Ferner weist die Kupplung 3 Kopplungsführungsabschnitte 8 auf, die als umfangsseitige Stege ausgebildet sind. Die Stege stellen sicher, dass die Elemente der Steckverbindung 1 allein in Axialrichtung gefügt werden. Folglich wird während des Koppelns eine relative Bewegung in Radialrichtung zwischen den Elementen der Steckverbindung 1 verhindert.

Fig. 6 ist eine schematische Draufsicht auf ein Blendenelement 9 der dritten, exemplarischen Ausführungsform einer Kupplung 3 wie in Fig. 5 abgebildet. Das elastische Element 13, das hier als eine metallische Spiralfeder ausgebildet ist, liegt mit einem freien Ende an einem Begrenzungsabschnitt 16 an, der an dem Blendenelement 9 vorgesehen ist. Ein zweiter, nicht dargestellter Begrenzungsabschnitt 16, an dem das elastische Element 13 mit seinem anderen freien Ende anliegt, ist integral mit der Kupplung 3 ausgebildet. Das Blendenelement 9 der dritten Ausführungsform weist ferner einen zweiten Gleitabschnitt 19 auf, der derart ausgebildet ist, um von dem ersten Gleitabschnitt 17 der Kupplung 3 drehbar gelagert zu werden.

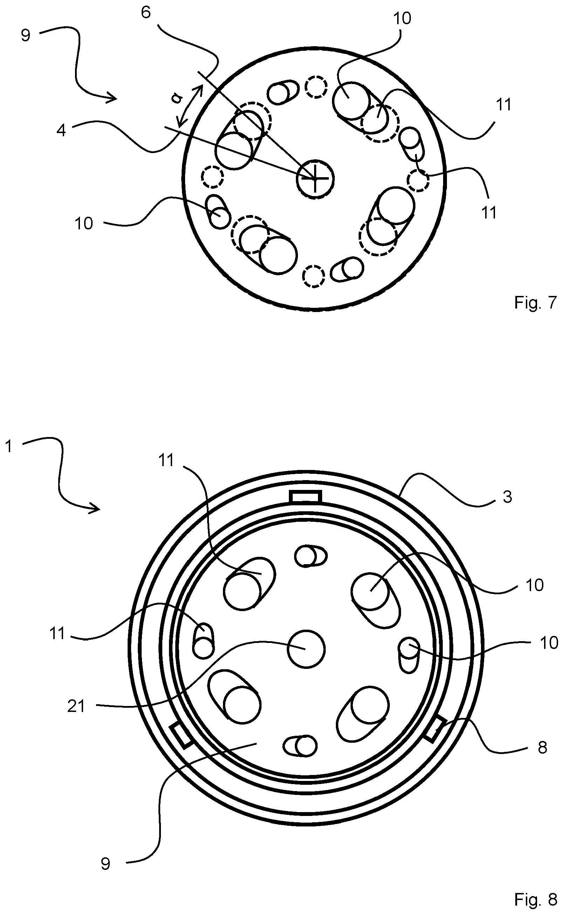

Fig. 7 ist eine schematische, stirnseitige Vorderansicht eines Blendenelements 9 gemäß der dritten, exemplarischen Ausführungsform im ersten, geschlossenen Zustand 4 und im zweiten, geöffneten Zustand 6. Es ist in dieser Abbildung erkennbar, wie die Führungsabschnitte 11 sich um Durchgangsöffnungen 10 herum erstrecken. Die Führungsabschnitte 11 sind als eine Vertiefung ausgebildet, die in Richtung der Durchgangsöffnung 10 zunimmt, so dass ein Stift 7 in der Vertiefung in Richtung der Durchgangsöffnung 10 geführt wird. Die Vertiefung dient neben der Führung und Zentrierung des Stifts 7 dazu, eine Relativbewegung des Blendenelements 9 bei Ausübung einer Fügekraft auf den Stift 7 in Kopplungsrichtung zu ermöglichen. Die Bewegung des Blendenelements 9 ist eine eindimensionale Drehbewegung zwischen dem ersten, geschlossenen Zustand 4 und dem zweiten, geöffneten Zustand 6. Sie ist durch einen Winkel a definiert, der durch die Begrenzungsabschnitte 16 des Blendenelements 9 und der Kupplung 3 bestimmt wird. Wenn das Blendenelement 9 sich in dem zweiten, geöffneten Zustand 6 befindet, fluchten die Durchgangsöffnungen 10 des Blendenelements 9 mit den Buchsen 5.

Fig. 8 ist eine schematische, stirnseitige Vorderansicht der dritten, exemplarischen Ausführungsform eines anderen Beispiels einer Kupplung 3 gemäß Fig. 5 einer Steckverbindung 1. In dieser Ansicht befindet sich das Blendenelement 9 in der zweiten, geöffneten Stellung 6. Die Durchgangsöffnungen 10 fluchten mit den Buchsen 5, entsprechend wie diese in der Kupplung 3 der Fig. 5 angeordnet sind. Zudem ist eine Durchgangsöffnung 10 axial zur Schutzleiterbuchse 21 ausgerichtet, wodurch die Schutzleiterbuchse 21 im ersten, geschlossenen Zustand 4 als auch im zweiten, geöffneten Zustand 6 frei zugänglich ist. Auch bei der dritten, exemplarischen Ausführungsform führt demnach eine rein axiale Bewegung der Steckeinrichtung in die Kupplung 3 dazu, dass sich das Blendenelement 9 aus dem ersten, geschlossenen Zustand 4, in dem sämtliche Buchsen 5 sicher abgedeckt sind, in den zweiten, geöffneten Zustand 6 bewegt. Greift die Steckeinrichtung vollständig in die Kupplung 3, so ist eine elektrische Verbindung sämtlicher Stift-Buchsen-Kombinationen hergestellt.

Mit dem Gegenstand der Erfindung, der durch die Ansprüche definiert ist, wurde eine Steckverbindung bereitgestellt, deren Blendenelement in einer Kupplung eines Ladekabels angeordnet werden kann und die die stromführenden Kontakte der Kupplung sicher physisch abdeckt und dazu geeignet ist, in eine oder mehrere nach DIN EN 62196 oder vorzugsweise in Typ2 nach IEC 62196-2-X spezifizierten Steckverbindungen integriert zu werden, um mit bereits bekannten fahrzeugseitigen Steckeinrichtungen ineinandergreifen zu können.

## Patentansprüche

1. Steckverbindung (1) zum Laden eines Elektrofahrzeugs mit:
einer Kupplung (3), die mindestens eine stromführende Buchse (5) aufweist,
einer Steckeinrichtung, die mindestens einen stromführenden Stift (7) aufweist,
wobei die Kupplung (3) und die Steckeinrichtung dazu eingerichtet sind, ausschließlich in einer Axialrichtung zueinander bewegt zu werden, um in Eingriff miteinander eine elektrische Verbindung zwischen der mindestens einen Buchse (5) und einem dazugehörigen mindestens einen Stift (7) herzustellen, und
mindestens einem Blendenelement (9) an der Kupplung (3), das mindestens eine Buchse (5) der Kupplung (3) in einer ersten, geschlossenen Stellung (4) abdeckt und das die mindestens eine Buchse (5) in einer zweiten, geöffneten Stellung (6) freigibt,
wobei das Bewegen der Kupplung (3) und der Steckeinrichtung zueinander in Axialrichtung ein Ineinandergreifen des mindestens einen Stifts (7) mit dem mindestens einen Blendenelement (9) derart bewirkt, dass durch eine Bewegung des Blendenelements (9), das Blendenelement (9) die zweite, geöffnete Stellung (6) einnimmt und somit ein elektrischer Kontakt zwischen dem mindestens einen Stift (7) und der entsprechenden mindestens einen Buchse (5) ermöglicht ist,
wobei die Bewegung des Blendenelements (9) in die zweite, geöffnete Stellung (6) in Axialrichtung gerichtet ist, und
wobei das Blendenelement (9) mindestens einen Führungsabschnitt (11) aufweist, der dazu eingerichtet ist, die Bewegung in Axialrichtung des mindestens einen Stifts (7) in die Bewegung des Blendenelements (9) in die zweite, geöffnete Stellung (6) zu überführen.

2. Steckverbindung (1) nach Anspruch 1, **dadurch gekennzeichnet, dass** der Führungsabschnitt (11) sich über einen Großteil der Stirnfläche des Blendenelements (9) erstreckt.

3. Steckverbindung (1) nach einem der vorhergehenden Ansprüche, **dadurch gekennzeichnet, dass** der Führungsabschnitt (11) als eine konische und/oder kegelförmige Vertiefung ausgebildet ist, die mit einer abgerundeten Stirnfläche des Stifts (7) beim Koppeln der Steckverbindung (1) zusammenwirkt.

4. Steckverbindung (1) nach Anspruch 3, **dadurch gekennzeichnet, dass** der Führungsabschnitt (11) in Axialrichtung in einer Querschnitt-Seitenansicht spitz zulaufend ist, vorzugsweise beträgt ein Öffnungswinkel des Führungsabschnitts (11) weniger als 90°.

5. Steckverbindung (1) nach einem der vorhergehenden Ansprüche, **dadurch gekennzeichnet, dass** der Führungsabschnitt (11) als Vertiefung in dem mindestens einen Blendenelement (9) ausgebildet und dazu eingerichtet ist, mindestens einen Stift (7) in Axial- und Radialrichtung bezüglich der mindestens einen Buchse (5) zu führen.

6. Steckverbindung (1) nach Anspruch 5, **dadurch gekennzeichnet, dass** der Führungsabschnitt (11) dazu ausgebildet ist, die Längsachse des Stifts (7) der Steckeinrichtung zu einer Längsachse der Buchse (5) der Kupplung (3) auszurichten.

7. Steckverbindung (1) nach einem der vorhergehenden Ansprüche, **dadurch gekennzeichnet, dass** das mindestens eine Blendenelement (9) von einer vorbestimmten Rückstellkraft mindestens eines elastischen Elements (13) in der ersten, geschlossenen Stellung (4) gehalten wird.

8. Steckverbindung (1) nach einem der vorhergehenden Ansprüche, **dadurch gekennzeichnet, dass** jede Buchse (5) eine Hülse (15) aus elektrisch isolierendem Material aufweist, die integral mit der Kupplung (3) ausgebildet ist.

9. Steckverbindung (1) nach Anspruch 8, **dadurch gekennzeichnet, dass** die Kupplung (3), die Buchse (5) oder die Hülse (15) die Bewegung des Blendenelements (9) in der ersten, geschlossenen Stellung (4) und/oder in der zweiten, geöffneten Stellung (6) begrenzt.

10. Steckverbindung (1) nach einem der vorhergehenden Ansprüche, **dadurch gekennzeichnet, dass** die Bewegung des Blendenelements (9) in die zweite, geöffnete Stellung (6) mindestens teilweise von der Buchse (5) geführt ist.

11. Steckverbindung (1) nach Anspruch 8, **dadurch gekennzeichnet, dass** die Hülse (15) einen Abschnitt aufweist, der die Stirnseite der Buchse (5) umgibt.

12. Steckverbindung (1) nach einem der vorhergehenden Ansprüche, **dadurch gekennzeichnet, dass** die Kupplung (3), insbesondere die Hülse (15), mindestens einen ersten Gleitabschnitt (17) aufweist und das Blendenelement (9) entsprechend mindestens einen zweiten Gleitabschnitt (19) aufweist, derart, dass das Blendenelement (9) in Axialrichtung zur Buchse (5) geführt ist.

13. Steckverbindung (1) nach Anspruch 11, **dadurch gekennzeichnet, dass** der Abschnitt der Hülse (15), der die Buchse (5) stirnseitig umgibt, derart ausgebildet ist, um den Stift (7) axial bezüglich der Buchse (5) zu führen und zu zentrieren.

14. Steckverbindung (1) nach Anspruch 13, **dadurch gekennzeichnet, dass** die Buchse (5) von dem Abschnitt der stirnabdeckenden Hülse (15) mindestens teilweise in der Radial- und/oder der Axialrichtung beabstandet ist.

15. Steckverbindung (1) nach einem der vorhergehenden Ansprüche, **dadurch gekennzeichnet, dass** der Führungsabschnitt (11) im Mittelpunkt des mindestens einen Blendenelements (9) angeordnet ist und dass ausschließlich ein Blendenelement (9) pro Buchse (5) vorgesehen ist, das dazu eingerichtet ist, ausschließlich axial bewegt zu werden.
